# EUROPEAN PATENT APPLICATION

(11) **EP 4 660 953 A1**
(43) Date of publication of application: **10.12.2025**
(21) Application number: 24829774.9
(22) Date of filing: 24.01.2024
(51) Int. Cl.: G06T 15/00, G06T 1/20, G06T 5/50, A63F 13/52

(54) **RENDERING METHOD, APPARATUS AND SYSTEM**

(30) Priority: 30.06.2023 CN 202310808445
(71) Applicant: Huawei Technologies Co., Ltd., Shenzhen, Guangdong 518129 (CN)
(72) Inventor: GAO, Hongyan, Shenzhen, Guangdong 518129 (CN); XU, Baolei, Shenzhen, Guangdong 518129 (CN); WANG, Xiaojie, Shenzhen, Guangdong 518129 (CN)
(74) Representative: Maiwald GmbH
(86) International application number: PCT/CN2024/073844
(87) International publication number: WO 2025/001111

(57) **Abstract**

This application discloses a rendering method, apparatus, and system, to ensure normal running of an application as much as possible. The method includes: A first area in a first image of a first application is rendered, to obtain a first rendering result of the first area. A terminal sends a first rendering request to a server, and obtains a second rendering result from the server. Then, the terminal fuses the first rendering result and the second rendering result to obtain the first image, and displays the first image.

## Description

This application claims priority to Chinese Patent Application No. 202310808445.1, filed with the China National Intellectual Property Administration on June 30, 2023 and entitled "RENDERING METHOD, APPARATUS, AND SYSTEM", which is incorporated herein by reference in its entirety.

### TECHNICAL FIELD

Embodiments of this application relate to the field of image processing technologies, and in particular, to a rendering method, apparatus, and system.

### BACKGROUND

Currently, users can experience high-definition 3D games by using terminals. To improve reality and image quality of 3D games, developers can design and add a plurality of special effects, for example, light and shadow effects, for the 3D games. As a result, a large quantity of GPU computing resources are consumed when game images in the 3D games are rendered. Consequently, phenomena such as frame freezing and frame dropping occur when the 3D games are run, and good game experience cannot be ensured.

To resolve the frame freezing problem during 3D game running, some game vendors provide a cloud game solution, that is, a cloud server is used to complete game running logic. However, this solution has a high requirement on quality of a network between a terminal and the cloud server. Once a network problem occurs, the 3D game cannot be run normally.

### SUMMARY

Embodiments of this application provide a rendering method, apparatus, and system, to implement normal running of an application.

To achieve the foregoing objective, the following technical solutions are used in embodiments of this application.

According to a first aspect, an embodiment of this application provides a rendering method. The method is applied to a terminal. The method may be performed by the terminal, or may be performed by a component (for example, a chip, a chip system, or a processor of the terminal). The following uses an example in which the method is performed by the terminal for description, a first application is installed on the terminal, and the method includes: A first area in a first image of the first application is rendered, to obtain a first rendering result of the first area. The terminal sends a first rendering request to a server, and obtains a second rendering result from the server. Then, the terminal fuses the first rendering result and the second rendering result to obtain the first image, and displays the first image.

The first rendering request is used to request the server to render a second area in the first image, to obtain the second rendering result, and the second area is an area other than the first area in the first image.

In this application, in a running process of the first application, the terminal and the server may collaboratively process a rendering task of the first application, to avoid a performance bottleneck caused by independently processing the rendering task by the server, so that normal running of the first application can be ensured as much as possible.

In a possible design of the first aspect, the method may further include:
rendering a third area in a second image of the first application, to obtain a third rendering result of the third area;
sending a second rendering request to the server, where the second rendering request is used to request the server to render a fourth area in the second image, to obtain a fourth rendering result, and the fourth area is an area other than the third area in the second image; and
when the fourth rendering result fails to be obtained from the server, displaying the second image based on the third rendering result.

In the method, the terminal renders the third area in a game image. In this way, even if quality of a network between the terminal and the server is poor, and the terminal cannot receive the rendering result of the server or cannot receive the rendering result of the server in time, that the terminal generates the game image including the third area (for example, an area in which a character is located) may not be affected. This meets a requirement for real-time generation and display of the game image including the third area, and improves smoothness of the game image.

In a possible design of the first aspect, the method further includes:
sending the rendering request to the server when the quality of the network between the terminal and the server is restored to meet a preset condition. In this way, if the quality of the network does not meet the condition, the terminal does not send the rendering request to the server, and the terminal locally performs rendering. Subsequently, when the quality of the network meets the condition, the terminal may deliver a rendering task of a subsequent frame to the server.

In a possible design of the first aspect, the first area is a dynamic image area in the first image, and the second area is a static image area in the first image; or the first area is a low-level high-frequency area in the first image, and the second area is a high-level low-frequency area in the first image; and/or
the third area is a dynamic image area in the second image, and the fourth area is a static image area in the second image; or the third area is a low-level high-frequency area in the second image, and the fourth area is a high-level low-frequency area in the second image.

In some examples, the terminal renders an area (for example, the area in which the character is located) that has a high requirement on real-time performance in the game image, or it is understood that the terminal renders an area that has great impact on image smoothness, a user operation, or a user vision in the game image. In this way, even if the quality of the network between the terminal and the server is poor, and the terminal cannot receive the rendering result of the server or cannot receive the rendering result of the server in time, that the terminal generates the game image including the area (for example, the area in which the character is located) may not be affected. This meets a requirement for real-time generation and display of the game image including the area, and improves smoothness of the game image.

In a possible design of the first aspect, sending the first rendering request to the server includes:
determining quality of a network between the terminal and the server; and
if the quality of the network between the terminal and the server meets a preset condition, sending the first rendering request to the server.

If the quality of the network meets the condition, it means that the quality of the network between the terminal and the server is good, so that the server can return the rendering result of the image of the first application to the terminal in time after rendering, to improve smoothness of running of the first application.

On the contrary, if the quality of the network does not meet the condition, it means that the quality of the network between the mobile phone and the server is poor. In this case, to avoid a case in which the rendering result cannot be returned to the terminal in time because the server performs rendering, the terminal may not send the rendering request to the server, and the terminal locally performs rendering. Subsequently, when the quality of the network meets the condition, the terminal may deliver the rendering task of the subsequent frame to the server.

In a possible design of the first aspect, that the quality of the network between the terminal and the server meets the preset condition includes meeting at least one of the following conditions:

A packet loss rate between the terminal and the server is less than or equal to a first threshold, a bandwidth between the terminal and the server is greater than or equal to a second threshold, a transmission delay between the terminal and the server is less than or equal to a third threshold, and a transmission rate between the terminal and the server is greater than or equal to a fourth threshold.

In a possible design of the first aspect, the method further includes:
receiving a first operation in the running process of the first application;
starting a second application in response to the first operation; and
executing a first task by using the second application.

Some tasks (for example, the first task) of the terminal mostly depend on a local resource of the mobile phone. In this case, game logic is all run on the server in a related cloud game technology, the server cannot directly use a corresponding resource of the terminal, and processing efficiency of executing the first task is low. In this application, in the running process of the first application, after receiving the first operation, the terminal may directly start the local second application to process the first task.

In a possible design of the first aspect, the method further includes:
obtaining data of the first image of the first application; and
determining the first area and the second area in the first image according to a rendering strategy.

In a possible design of the first aspect, the rendering strategy includes: whether to activate a device-cloud collaboration capability when the first application is run, a preset condition for activating the device-cloud collaboration capability, and an image area that needs to be rendered by the server when the first application is run.

Based on the rendering strategy, the terminal can determine the image area that needs to be rendered by the terminal and the image area that needs to be rendered by the server. In this way, through device-cloud collaborative rendering, image rendering efficiency of the first application can be improved, and smooth display of the image of the first application can be supported as much as possible, to ensure normal running of the first application.

In a possible design of the first aspect, the rendering strategy is a strategy preset by a developer in the first application.

In this way, after the developer sets the rendering strategy in the first application, in the running process of the first application, device-cloud collaborative rendering may be implemented based on the rendering strategy, to improve rendering efficiency.

In a possible design of the first aspect, the method further includes:
determining information about a first rendering resource corresponding to the second area, where the first rendering request includes the information about the first rendering resource, and the information is used by the server to check whether the first rendering resource is stored.

In this way, the server may determine, based on the information (for example, a hash value) about the rendering resource, whether the rendering resource is uploaded. For a rendering resource that is uploaded to the server historically, the terminal does not need to repeatedly upload the rendering resource, to reduce transmission overheads.

In a possible design of the first aspect, the first task includes a payment task, and the second application is an application having a payment function.

In the method, in the running process of the first application, a task, like payment, that depends on support of a function of the terminal is processed by the terminal. Therefore, the terminal can quickly process the payment task by using the function of the terminal, to improve processing efficiency of the payment task.

In a possible design of the first aspect, the first application includes a 3D application, and the 3D application includes at least one of the following applications: a 3D game application, a 3D social application, and a 3D live-streaming application.

In this way, for the 3D application that focuses on interaction experience, in the running process, an image of the 3D application may be rendered through device-cloud collaboration, so that rendering efficiency can be improved, and interaction experience between a user and the 3D application can be improved.

In a possible design of the first aspect, rendering the first area in the first image of the first application includes:
rendering the first area in the first image of the first application by using a graphics processing unit GPU.

According to a second aspect, a rendering method is provided, and is applied to a server or a component (for example, a chip, a chip system, or a processor of the server). The method includes:
receiving a first rendering request from a terminal, where the first rendering request is used to request the server to render a second area in a first image, to obtain a second rendering result, and the second area is an area other than a first area in the first image; and
sending the second rendering result to the terminal, where the second rendering result is used to be fused with a first rendering result obtained by the terminal by rendering the first area, to obtain the first image.

In a possible design of the second aspect, the first area is a dynamic image area in the first image, and the second area is a static image area in the first image; or the first area is a low-level high-frequency area in the first image, and the second area is a high-level low-frequency area in the first image.

Through proper division of a device-cloud computing power, a task that needs to be computed on a cloud and a task that needs to be computed on a device side may be allocated on demand on the device side. For example, a task that is insensitive to a delay (for example, a rendering task of the second area) may be allocated to the cloud for running, so that even if a network is disconnected or quality of the network is poor, basic local operation experience on the terminal can be ensured.

Optionally, after a rendering resource in the static image area is uploaded to the cloud, the rendering resource may be stored on the cloud. Subsequently, the rendering resource does not need to be repeatedly uploaded, and only information (for example, a hash value) about the rendering resource needs to be uploaded, to implement cloud-based rendering resource retrieval.

According to a third aspect, a rendering method is provided, and is applied to a terminal or a corresponding component, where a first application is installed on the terminal, and the method includes:
when quality of a network between the terminal and a server can meet a preset condition, sending a rendering request to the server, where the rendering request is used to request the server to execute a first rendering task on a first image;
receiving, from the server, a first rendering result obtained by executing the first rendering task by the server; and
displaying the first image based on a first rendering result.

In a possible design of the third aspect, the preset condition includes:

A packet loss rate between the terminal and the server is less than or equal to a first threshold, a bandwidth between the terminal and the server is greater than or equal to a second threshold, a transmission delay between the terminal and the server is less than or equal to a third threshold, and a transmission rate between the terminal and the server is greater than or equal to a fourth threshold.

In a possible design of the third aspect, the first rendering task is a rendering task for a first area in the first image, and the method further includes:
executing a second rendering task for a second area in the first image, to obtain a second rendering result of the second area, where the second area is an area other than the first area in the first image; and
displaying a first frame based on the first rendering result includes:
   displaying the first image based on the first rendering result of the first area and the second rendering result of the second area.

For the first area and the second area, refer to any possible design of the first aspect or the second aspect.

In this way, the rendering task (for example, a rendering task with a high computing power and insensitive to a delay) of the second area is delivered to the server, and other tasks (for example, the rendering task and a payment task of the first area) are still executed by the terminal. This can improve image rendering efficiency of the first application, and ensure use experience of the first application.

In a possible design of the third aspect, the method further includes:
displaying the first image based on the first rendering result of the first area and the second rendering result of the second area includes:
if the second rendering result is not received within a preset time period, displaying the first image based on the first rendering result.

In this way, when a terminal-side rendering request is uploaded to a cloud, a rendering task that needs to be processed by the cloud and a rendering task that needs to be processed by the terminal side may be dynamically allocated based on conditions such as a service requirement and a network status, to improve rendering efficiency.

In a possible design of the third aspect, the method further includes:
receiving a first operation performed by a user;
starting a second application in response to the operation; and
executing a corresponding task by using the second application.

According to a fourth aspect, a rendering method is provided, and is applied to a terminal or a corresponding component, where a first application is installed on the terminal, and the method includes:
receiving, in a process of running the first application, a first operation performed by a user;
starting a second application in response to the operation; and
executing a corresponding task by using the second application.

In a possible implementation, the second application is run on a CPU.

According to a fifth aspect, a rendering apparatus is provided, and is used for a terminal or a corresponding component, where a first application is installed on the terminal, and the apparatus includes:
a processing module, configured to render a first area in a first image of the first application, to obtain a first rendering result of the first area;
a communication module, configured to send a first rendering request to a server, where the first rendering request is used to request the server to render a second area in the first image, to obtain a second rendering result, and the second area is an area other than the first area in the first image;
a communication module, further configured to obtain the second rendering result from the server;
a processing module, further configured to fuse the first rendering result and the second rendering result to obtain the first image; and
a display module, configured to display the first image.

In a possible design of the fifth aspect, the processing module is further configured to render a third area in a second image of the first application, to obtain a third rendering result of the third area;
the communication module is further configured to send a second rendering request to the server, where the second rendering request is used to request the server to render a fourth area in the second image, to obtain a fourth rendering result, and the fourth area is an area other than the third area in the second image; and
the display module is further configured to: when the fourth rendering result fails to be obtained from the server, display the second image based on the third rendering result.

In a possible design of the fifth aspect, the first area is a dynamic image area in the first image, and the second area is a static image area in the first image; or the first area is a low-level high-frequency area in the first image, and the second area is a high-level low-frequency area in the first image; and/or
the third area is a dynamic image area in the second image, and the fourth area is a static image area in the second image; or the third area is a low-level high-frequency area in the second image, and the fourth area is a high-level low-frequency area in the second image.

In a possible design of the fifth aspect, sending the first rendering request to the server includes:
determining quality of a network between the terminal and the server; and
if the quality of the network between the terminal and the server meets a preset condition, sending the first rendering request to the server.

In a possible design of the fifth aspect, that the quality of the network between the terminal and the server meets the preset condition includes meeting at least one of the following conditions:

A packet loss rate between the terminal and the server is less than or equal to a first threshold, a bandwidth between the terminal and the server is greater than or equal to a second threshold, a transmission delay between the terminal and the server is less than or equal to a third threshold, and a transmission rate between the terminal and the server is greater than or equal to a fourth threshold.

In a possible design of the fifth aspect, the apparatus further includes an input module, configured to receive a first operation in a running process of the first application; and
the processing module is further configured to: start a second application in response to the first operation, and execute a first task by using the second application.

In a possible design of the fifth aspect, the processing module is further configured to:
obtain data of the first image of the first application; and
determine the first area and the second area in the first image according to a rendering strategy.

In a possible design of the fifth aspect, the rendering strategy includes: whether to activate a device-cloud collaboration capability when the first application is run, a preset condition for activating the device-cloud collaboration capability, and an image area that needs to be rendered by the server when the first application is run.

In a possible design of the fifth aspect, the rendering strategy is a strategy preset by a developer in the first application.

In a possible design of the fifth aspect, the processing module is further configured to:
determine information about a first rendering resource corresponding to the second area, where the first rendering request includes the information about the first rendering resource, and the information is used by the server to check whether the first rendering resource is stored.

In a possible design of the fifth aspect, the first task includes a payment task, and the second application is an application having a payment function.

In a possible design of the fifth aspect, the first application includes a 3D application, and the 3D application includes at least one of the following applications: a 3D game application, a 3D social application, and a 3D live-streaming application.

In a possible design of the fifth aspect, rendering the first area in the first image of the first application includes:
rendering the first area in the first image of the first application by using a graphics processing unit GPU.

According to a sixth aspect, a rendering apparatus is provided, and the apparatus includes:
a communication module, configured to receive a first rendering request from a terminal, where the first rendering request is used to request a server to render a second area in a first image, to obtain a second rendering result, and the second area is an area other than a first area in the first image; and
the communication module is further configured to send the second rendering result to the terminal, where the second rendering result is used to be fused with a first rendering result obtained by the terminal by rendering the first area, to obtain the first image.

In a possible design of the sixth aspect, the first area is a dynamic image area in the first image, and the second area is a static image area in the first image; or the first area is a low-level high-frequency area in the first image, and the second area is a high-level low-frequency area in the first image.

According to a seventh aspect, a rendering apparatus is provided, and the apparatus includes:
a communication module, configured to: when quality of a network between a terminal and a server can meet a preset condition, send a rendering request to the server, where the rendering request is used to request the server to execute a first rendering task on a first image; and
the communication module is further configured to receive, from the server, a first rendering result obtained by executing the first rendering task by the server; and
a display module, configured to display the first image based on the first rendering result.

In a possible design of the seventh aspect, the preset condition includes:

A packet loss rate between the terminal and the server is less than or equal to a first threshold, a bandwidth between the terminal and the server is greater than or equal to a second threshold, a transmission delay between the terminal and the server is less than or equal to a third threshold, and a transmission rate between the terminal and the server is greater than or equal to a fourth threshold.

In a possible design of the seventh aspect, the first rendering task is a rendering task for a first area in the first image, and the method further includes:
executing a second rendering task for a second area in the first image, to obtain a second rendering result of the second area, where the second area is an area other than the first area in the first image; and
displaying a first frame based on the first rendering result includes:
   displaying the first image based on the first rendering result of the first area and the second rendering result of the second area.

For the first area and the second area, refer to any possible design of the first aspect or the second aspect.

In a possible design of the seventh aspect, displaying the first image based on the first rendering result of the first area and the second rendering result of the second area includes:
if the second rendering result is not received within a preset time period, displaying the first image based on the first rendering result.

In a possible design of the seventh aspect, the apparatus further includes an input module, configured to receive a first operation performed by a user; and
a processing module, further configured to: start a second application in response to the operation; and execute a corresponding task by using the second application.

According to an eighth aspect, a rendering apparatus is provided, and the apparatus includes:
an input module, configured to receive, in a process of running a first application, a first operation performed by a user; and
a processing module, configured to: start a second application in response to the operation; and execute a corresponding task by using the second application.

In a possible implementation, the second application is run on a CPU.

According to a ninth aspect, an embodiment of this application provides a terminal, where the terminal includes a touchscreen, a memory, a transceiver, one or more processors, a plurality of applications, and one or more programs; the one or more programs are stored in the memory, and the transceiver is configured to transmit or receive a wireless signal; and when the one or more processors execute the one or more programs, the terminal is enabled to implement the method according to the first aspect.

According to a tenth aspect, an embodiment of this application provides a computer-readable storage medium, where the computer-readable storage medium includes computer instructions, and when the computer instructions are run on a computer, the computer is enabled to perform the method according to any one of the foregoing aspects.

According to an eleventh aspect, an embodiment of this application provides a chip system, including one or more processors. When the one or more processors execute instructions, the one or more processors perform the method according to the first aspect or the method according to the second aspect.

According to a twelfth aspect, this application provides an apparatus, where the terminal includes a processor and a memory, the memory is configured to store computer program code, the computer program code includes computer instructions, and when the processor executes the computer instructions, the method according to any possible design of any one of the foregoing aspects of this application is performed.

According to a thirteenth aspect, an embodiment of this application provides a computer program product. When the computer program product runs on a computer, the computer is enabled to perform the method according to any aspect.

### BRIEF DESCRIPTION OF DRAWINGS

FIG. 1 is a diagram of a scenario of a cloud game technology;
FIG. 2 is a schematic flowchart of application development and use according to an embodiment of this application;
FIG. 3 is a diagram of an application image according to an embodiment of this application;
FIG. 4 is a diagram of a structure of a rendering system according to an embodiment of this application;
FIG. 5 is a diagram of a structure of a rendering system according to an embodiment of this application;
FIG. 6 is a diagram of a rendering resource according to an embodiment of this application;
FIG. 7A is a diagram of a structure of a terminal according to an embodiment of this application;
FIG. 7B is a diagram of a structure of a server according to an embodiment of this application;
FIG. 8A and FIG. 8B are a schematic flowchart of a rendering method according to an embodiment of this application;
FIG. 9 is a diagram of a scenario of a rendering method according to an embodiment of this application;
FIG. 10A is a diagram of a scenario of a rendering method according to an embodiment of this application;
FIG. 10B is a schematic flowchart of a rendering method according to an embodiment of this application;
FIG. 11 is a diagram of a scenario of a rendering method according to an embodiment of this application;
FIG. 12A and FIG. 12B are a schematic flowchart of a rendering method according to an embodiment of this application;
FIG. 13 is a schematic flowchart of a rendering method according to an embodiment of this application;
FIG. 14 is a diagram of a structure of a rendering apparatus according to an embodiment of this application; and
FIG. 15 is a diagram of a structure of a chip system according to an embodiment of this application.

### DESCRIPTION OF EMBODIMENTS

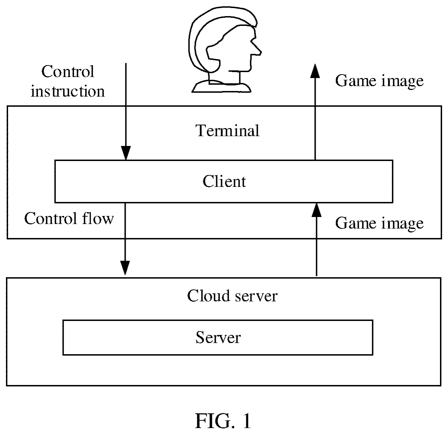

FIG. 1 shows a cloud game solution in a related technology. In the solution, a client (client) of a game application is installed and run on a terminal, a server (server) of the game application is installed and run on a cloud server, and the server and the client are used together. The terminal receives a control instruction input by a game player, and sends the control instruction to the cloud server, and the cloud server processes a task in a running process of the game application. After processing the task, the cloud server generates a corresponding processing result, and sends the processing result to the terminal. For example, the player moves a character role in a game through the client on the terminal. After receiving a movement operation input by the player, the terminal sends the movement operation to the cloud server. The cloud server renders a game image based on the movement operation, and returns a rendered game image to the terminal. The terminal displays the game image through the client. For another example, if the player expects to purchase game equipment during game playing, the player may tap a purchase button on a client interface. After receiving the purchase operation of the user, the terminal sends the purchase operation to the cloud server. The cloud server triggers, based on the purchase operation of the user, the terminal to execute a payment procedure. For example, the cloud server sends a QR code to the terminal, and after receiving the QR code, the terminal scans the QR code to jump to a corresponding payment interface to execute the payment procedure.

It can be learned that, in the foregoing cloud game solution, the terminal is only responsible for receiving a user operation related to the game application, and all tasks of the game application are processed by the cloud server. A large quantity of computing resources of the cloud server, such as CPU and GPU resources, are consumed, and computing costs of the cloud server are high. In addition, because tasks of the entire game application are processed by the cloud server, and a payment application used for payment is not installed on the cloud server, the cloud server cannot directly execute the payment procedure, but needs to trigger, in a manner like a QR code, the terminal to execute the payment procedure. The payment procedure is complex.

Moreover, the cloud game method is highly dependent on quality of a network. Once the network between the terminal and the cloud server is interrupted or unstable, a high packet loss rate and a large delay are caused. Consequently, a game image returned by the cloud server to the terminal is delayed, and a delay and frame freezing occur when the terminal displays the game image. In this case, the game application cannot be run smoothly.

An embodiment of this application provides a rendering method. The method may be applied to a 3D application scenario, for example, a scene like a 3D game, 3D digital human socializing, or 3D digital human live streaming. Alternatively, the method may be further applied to another scenario, for example, may be applied to another application that has a high requirement on fluency.

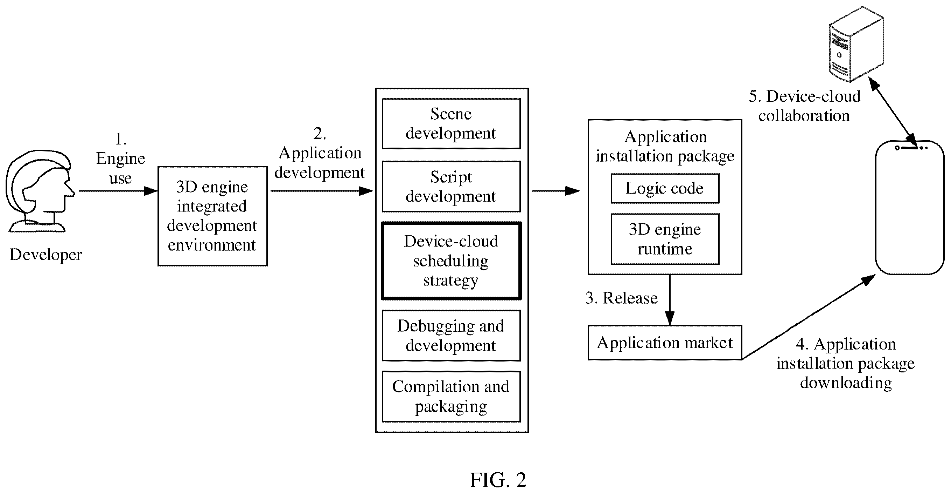

FIG. 2 shows an example of a development and use procedure of a 3D application. The procedure may include the following steps.
1. A developer uses a 3D engine integrated development environment (integrated development environment, IDE) to develop the 3D application. The 3D application may be a game application, or may be a non-game 3D application.
2. Application development: An application development process includes the following steps.
   (1) Scene development: During scene development, the developer can place objects in a 3D world at corresponding locations and debug effects, for example, placing characters and static objects of the 3D application, adding lights, and adding special effects.
   (2) Script development: A logic script (which may also be referred to as logic code) used to describe specific service logic of the 3D application may be obtained through script development. The script development includes but is not limited to development of a backpack system and a fighting system.
   (3) Debugging and development: In this process, the developer can use the 3D engine IDE to debug a function of the 3D application.
   (4) Compilation and packaging: After the function of the 3D application is developed and debugged, the developer can use a compilation and packaging function provided by the 3D engine IDE to package a project corresponding to the entire 3D application into an executable file, for example, an APK installation package.

The installation package obtained through compilation and packaging includes logic code obtained through script development, 3D engine runtime (Runtime), and a scene obtained through scene development.

The 3D engine runtime is a specific implementation of an application programming interface (application programming interface, API) opened by an engine to the developer. The engine runtime is logically decoupled from an application. For example, the 3D engine runtime has a capability of an engine framework, but is not limited to basic capabilities such as task scheduling, a basic algorithm library, and inter-module communication. For another example, the 3D engine runtime further has capabilities such as physical simulation, animation simulation, particle simulation, and engine rendering. In a running phase of the 3D application, the 3D application inputs data such as a material and game logic to the engine runtime, and the engine runtime returns a result based on the input data, for example, returns a particle simulation result in a game image.

Scene: The scene includes objects, and the objects have corresponding resources (which may also be referred to as assets). The resources include but are not limited to model resources, material resources, and map resources.

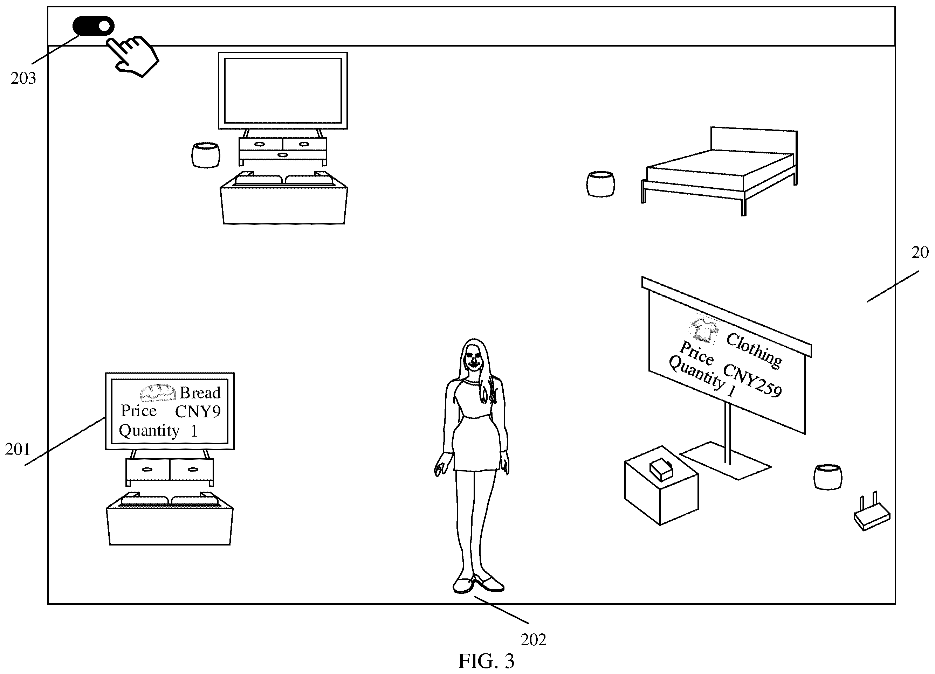

For example, a scene shown in FIG. 3 includes objects such as a character 202 and a television 201. In FIG. 3, a contour of the character 202 may be represented by a 3D model resource, and materials of different parts of the character 202 may be represented by material resources. For example, a material of skin and a material of clothing (for example, a cloth material) may be represented by corresponding material resources. A color and a texture of the clothing of the character 202 may be represented by corresponding map resources.

In this embodiment of this application, when developing an application, the developer newly develops a logical function of a device-cloud scheduling strategy. The device-cloud scheduling strategy may include at least one of the following: whether to activate a device-cloud collaboration capability, a condition for activating the device-cloud collaboration capability, and a task that needs to be processed by a cloud (for example, an image area rendered by the cloud) when the 3D application is run.

Device-cloud collaboration means that a terminal and a cloud server (which may be referred to as a server for short) collaboratively process a task, to support running of the 3D application. In some examples, all tasks used to support running of the 3D application are processed by the terminal. Alternatively, some tasks are processed by the terminal, and some tasks are processed by the server. In this way, the terminal processes at least some tasks, so that a problem caused by processing all tasks of the 3D application by the server can be avoided, and normal running of the 3D application can be ensured as much as possible.

The condition for activating the device-cloud collaboration capability includes but is not limited to that quality of a network between the terminal and the cloud server meets a preset condition. That the quality of the network between the terminal and the cloud server meets the preset condition includes meeting at least one of the following conditions:

A packet loss rate between the terminal and the cloud server is less than or equal to a first threshold, a bandwidth between the terminal and the cloud server is greater than or equal to a second threshold, a transmission delay between the terminal and the cloud server is less than or equal to a third threshold, and a transmission rate between the terminal and the cloud server is greater than or equal to a fourth threshold.

Certainly, the preset condition may alternatively be another condition, for example, a throughput is greater than a threshold. The preset condition is not limited in embodiments of this application, provided that the quality of the network between the terminal and the cloud server is good enough, so that image rendering of the 3D application is not delayed, or a delay degree is small, and an image of the 3D application is displayed smoothly.

The 3D game is used as an example. In a process in which the 3D game is run on the terminal, for an area A (for example, a background) that has a low delay requirement in a frame of 3D game image, the server renders the area A, and for an area B (for example, an area in which a character is located) that has a high delay requirement in the frame of 3D game image, the terminal renders the area B. Then, the terminal fuses the area A and the area B into a complete frame of 3D game image, and displays the frame of 3D game image in the running process of the 3D game. It can be learned that, in the method, when the 3D game image is rendered, rendering does not completely depend on the server, but the terminal may render an image area with a high delay requirement. Therefore, smoothness of running of the 3D application no longer completely depends on the quality of the network between the terminal and the server, and smoothness of running of the 3D application can be improved.

In a possible implementation, the developer may configure the device-cloud scheduling strategy on a development interface of the 3D engine IDE. In some examples, a button or a control may be set on the development interface, and the developer may set the device-cloud scheduling strategy by using a corresponding control. For example, in FIG. 3, an interface 20 is the development interface. A switch 203 is set on the interface 20. When the switch 203 is turned on, the device-cloud collaboration capability is enabled, that is, the device-cloud collaboration capability is activated. In some examples, after the device-cloud collaboration capability is activated, the terminal and the server may collaborate to implement image rendering in the 3D application, for example, render an image of a scene shown on a game interface.

In another possible implementation, the developer adds corresponding code to the logic code, and the 3D application invokes the code during running, to enable the device-cloud collaboration capability.

Similarly, the developer may set, on the development interface or by using the logic code, a condition for activating the device-cloud collaboration capability, and a task that needs to be processed by the cloud.

3. After developing the 3D application, the developer can release the 3D application to an application market through operation activities, for users to download.

4. The user downloads an APK of the 3D application from the application market.

5. The user starts the 3D application on the terminal (for example, a mobile phone), and the terminal runs the 3D application.

After the developer configures the device-cloud scheduling strategy for the 3D application, in a running process of the 3D application, the 3D application collaborates with the server according to the configured device-cloud scheduling strategy, to render the image of the 3D application.

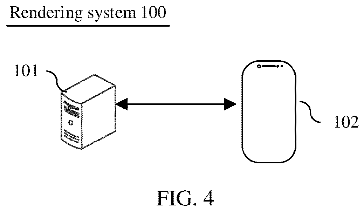

FIG. 4 shows a rendering system including a terminal and a cloud server. As shown in FIG. 4, a rendering system 100 may include a cloud server 101 and at least one terminal 102. The cloud server 101 and the terminal 102 may communicate with each other through a network.

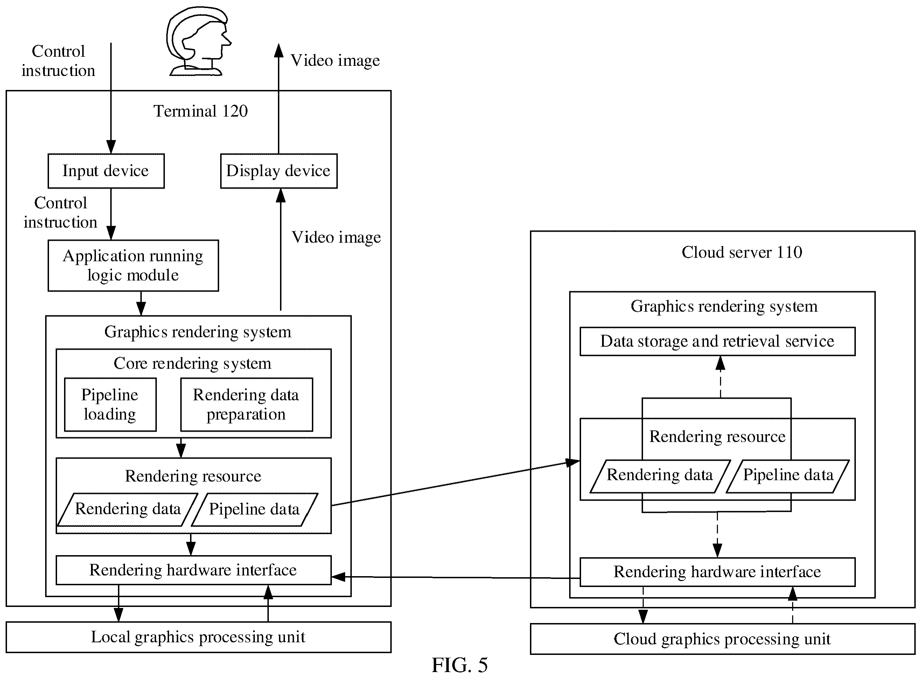

In some embodiments, as shown in FIG. 5, the terminal 102 may include an input device, a display device, a game running logic module, a graphics rendering system, and a local GPU.

The input device may be configured to receive an input operation of a user. In some examples, the input device is a built-in component or module of the terminal. For example, the input device is a touchscreen, and the user may input an operation by using the touchscreen of the terminal. In some other examples, the input device may be a device independent of the terminal, for example, may be a handle, a keyboard, or a mouse. For example, a 3D application is a game application. For example, the user inputs a control instruction by using a handle, to control a character role in a game to move.

The display device may be configured to display an image (for example, a game image) of the 3D application. For example, the display device is a display.

An application running logic module may be configured to calculate a task of the 3D application. The application running logic module may be located in the game application, or an SDK in the game application or a game service module in a mobile phone system, and is used by an upper-layer application to invoke and execute a related function. When the application running logic module is the game service module in the mobile phone system, the application running logic module may provide related service functions for a plurality of applications. For example, in a 3D game, the application running logic module may calculate a rendering resource of a game image, and send a rendering request to the graphics rendering system.

Optionally, the application running logic module may be a functional module in a CPU. Optionally, the application running logic module may alternatively be a software module run on the CPU. Certainly, the application running logic module may alternatively be in another form. A specific implementation form of the application running logic module is not limited in embodiments of this application.

Optionally, the application running logic module may be included in engine runtime of the 3D application.

The graphics rendering system, included in the engine runtime of the 3D application, may be configured to process a rendering task of the 3D application. Optionally, the graphics rendering system includes a core rendering system and a rendering hardware interface (render hardware interface, RHI).

The application running logic module invokes the graphics rendering system at each frame of game image. The graphics rendering system prepares rendering data of a corresponding frame of game image by using the core rendering system, and loads pipeline data corresponding to the frame of game image. For example, there are 30 frames or 60 frames of game images per second, and a specific frame rate may vary according to performance of the 3D application or the device.

The rendering data and the corresponding pipeline data may be collectively referred to as the rendering resource. The pipeline data may indicate to perform rendering by using the rendering data in a manner of a rendering pipeline (Pipeline).

The rendering data may be referred to as a draw packet. The rendering data includes information required for bottom-layer rendering, and may be understood as data required for a rendering task graph.

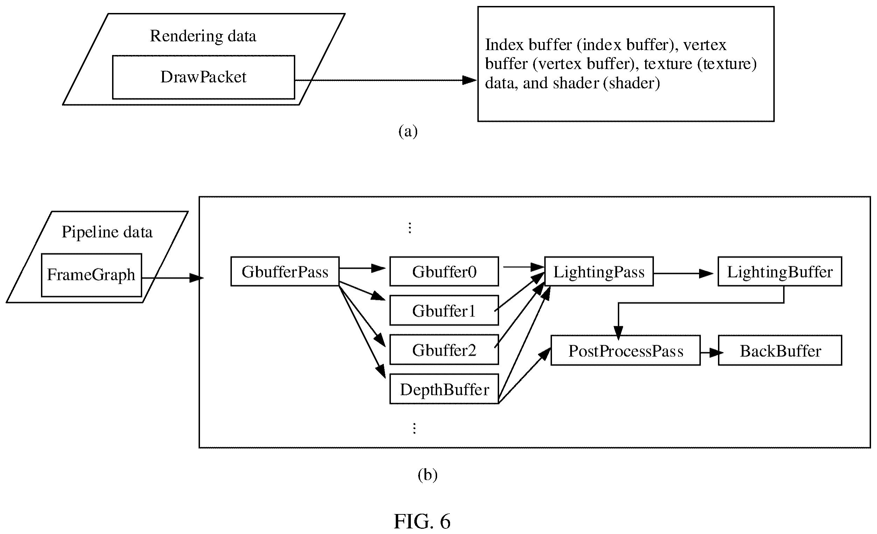

For example, as shown in (a) in FIG. 6, the rendering data includes mesh (mesh) data, vertex buffer (vertex buffer) data, index buffer (index buffer) data, material data, map data, and texture (texture) data of a 3D model, and related shader (shader) data.

The mesh data (mesh) of the 3D model may indicate a shape of the 3D model, and the 3D model may include a plurality of triangular surfaces. The mesh data includes one or more pieces of information such as vertex coordinates, a normal (normal), and texture coordinates (uv) of the 3D model.

A shader can be used to render images. An image rendering algorithm of a graphics card can be customized by using the shader, to achieve a desired image effect. The shader may include a vertex shader and a pixel shader. The vertex shader may be configured to calculate a vertex of each triangular surface of the 3D model in a scene, and a calculation result may be used for final pixel rendering. The pixel shader may be configured to calculate information such as illumination and a color in a scene in a unit of pixel. The shader (shader) data includes data information used by the shader in an image rendering process.

The pipeline data may be referred to as a frame graph, and may indicate a rendering task graph or a pipeline. The pipeline data may be understood as configuration data. By reading the configuration data, the device may know a pass (pass) included in the rendering process, an input and an output of each pass, and a use sequence of rendering data. The device may perform rendering by using the rendering data in sequence through passes.

A pass may be understood as a processing procedure or a processing step. The processing step may include a plurality of sub-steps. Optionally, each pass may be implemented by using one or more rendering algorithms.

Optionally, the pipeline data may be represented by using a directed acyclic graph. For example, the game application is used as an example. As shown in (b) in FIG. 6, the device processes depth information of an object in the game image through GbufferPass, and stores information obtained through processing in DepthBuffer. The depth information includes but is not limited to a distance between an object and a camera in a scene, and a blocking status between objects. The device may further obtain one or more pieces of the following information through the GbufferPass: a reaction of an object to light and roughness of the object. The device may further obtain rendering data such as a normal of an object through the GbufferPass, and the one or more pieces of information may be stored in Gbuffer (for example, Gbuffer0 to Gbuffer2). Then, the device may process and calculate an illumination status of an object through LightingPass, to obtain LightingBuffer. Then, the device may perform post-processing on information in the LightingBuffer and the DepthBuffer through PostProcessPass. For example, anti-aliasing processing is performed if aliasing on an image is serious. Then, backup processing may be performed, and related backup data is stored in BackBuffer.

(b) in FIG. 6 shows only a general working procedure of a pass in a rendering process, but not a specific rendering process.

Generally, each GPU has own rendering logic. The rendering logic varies during different GPU rending. The RHI can be used to shield differences caused by the rendering logic of different GPUs and provide a common interface layer. In this way, the core rendering system in the graphics rendering system may invoke, through a unified interface provided by the RHI, the GPU of the terminal 102 for rendering.

Optionally, the terminal 102 may be a device on which the 3D application is installed, such as a mobile phone, a tablet computer, a desktop computer, a laptop computer, a notebook computer, an ultra-mobile personal computer (ultra-mobile personal computer, UMPC), a handheld computer, a smart television, a netbook, or a virtual reality device. A specific form of the terminal is not specially limited in embodiments of this application.

In some embodiments, as shown in FIG. 5, the cloud server 101 may include a graphics rendering system, and the graphics rendering system may include a data storage and retrieval service and an RHI. The data storage and retrieval service may invoke, through the RHI, a GPU of the cloud server 101 for rendering.

In this embodiment of this application, some functions of engine runtime on a terminal side may be deployed on a cloud side, to form a graphics rendering system on the cloud side. This is equivalent to that the engine runtime on the terminal side and the graphics rendering system on the cloud side form a distributed engine. Subsequently, the graphics rendering system on the cloud side may provide a unified service for the terminal side, so that the cloud side can collaborate with the terminal side, to support normal running of the 3D application. In addition, in comparison with a related technology in which a server that matches a client on the terminal side needs to be deployed on the cloud (for example, if a client of an application 1 is installed on the terminal side, a server of the application 1 needs to be deployed on the cloud side; and if a client of an application 2 is installed on the terminal side, a server of the application 2 needs to be deployed on the cloud side), in the method in this embodiment of this application, the graphics rendering system on the cloud uniformly processes related tasks of the 3D application, and the graphics rendering system is decoupled from the client, so that a set of standard APIs can be provided externally in a unified manner, and a server that matches the client on the terminal side does not need to be deployed on the cloud side. This can reduce deployment complexity on the cloud side.

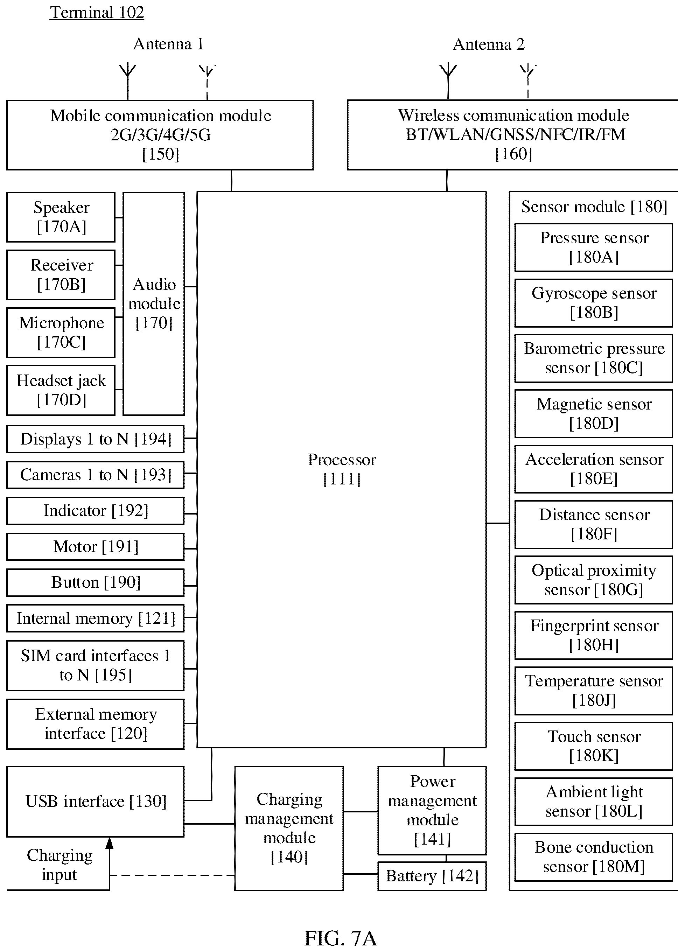

For example, FIG. 7A is a diagram of a structure of a device (for example, a terminal 102).

The device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the device. The controller may generate an operation control signal based on instruction operation code and a time sequence signal, to complete control of instruction reading and instruction execution.

The processor 110 may be further integrated with an internal memory for storing instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The charging management module 140 is configured to receive a charging input from the charger.

The power management module 141 is configured to connect the battery 142, the charging management module 140, and the processor 110. The power management module 141 receives an input from the battery 142 and/or the charging management module 140, and supplies power to the processor 110, the display 194, the camera 193, and the like.

A wireless communication function of the device may be implemented by using the antenna 1, the antenna 2, the mobile communication module 150, the wireless communication module 160, the modem processor, the baseband processor, and the like.

The mobile communication module 150 may provide a wireless communication solution that includes 2G/3G/4G/5G or the like and that is applied to the device. The wireless communication module 160 may provide a wireless communication solution that is applied to the device and that includes a wireless local area network (wireless local area network, WLAN) (for example, a wireless fidelity (wireless fidelity, Wi-Fi) network), Bluetooth (Bluetooth, BT), or the like.

The device may implement a display function by using the GPU, the display 194, the application processor, and the like. The GPU is a microprocessor for image processing, and is connected to the display 194 and the application processor.

The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In some embodiments, the device may include one or N displays 194, where N is a positive integer greater than 1.

The device may implement an image shooting function through the ISP, the camera 193, the video codec, the GPU, the display 194, the application processor, and the like.

The ISP is configured to process data fed back by the camera 193. For example, during image shooting, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and the like of the image. The ISP may further optimize parameters such as exposure and a color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

In some embodiments, the device may include one or N cameras 193, where N is a positive integer greater than 1. A specific location and form of the camera 193 are not limited in embodiments of this application.

The digital signal processor is configured to process a digital signal, and may process another digital signal in addition to the digital image signal. For example, when the device selects a frequency, the digital signal processor is configured to perform Fourier transformation on frequency energy.

The video codec is configured to compress or decompress a digital video. The device may support one or more types of video codecs. In this way, the device may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the device, for example, image recognition, facial recognition, speech recognition, and text understanding, may be implemented through the NPU.

The external memory interface 120 may be configured to connect to an external storage card, for example, a micro SD card, to extend a storage capability of the device. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121 and/or the instructions stored in the memory disposed in the processor, to perform various function applications of the device and data processing. The internal memory 121 may be any type of memory inside the device. The internal memory 121 may be an independent module, or may be integrated with another module.

The device may implement an audio function, for example, music playing and recording, by using the audio module 170, the speaker 170A, the receiver 170B, the microphone 170C, the headset jack 170D, the application processor, and the like.

The audio module 170 is configured to convert digital audio data into an analog audio electrical signal for output, and is also configured to convert an analog audio electrical signal input into digital audio data. The audio module 170 may include an analog-to-digital converter and a digital-to-analog converter. For example, the audio module 170 is configured to convert an analog audio electrical signal output by the microphone 170C into digital audio data. The audio module 170 may be further configured to code and decode audio data. In some embodiments, the audio module 170 may be disposed in the processor 110, or some functional modules in the audio module 170 are disposed in the processor 110.

The speaker 170A, also referred to as a "loudspeaker", is configured to convert an analog audio electrical signal into a sound signal. The device may listen to music or answer a hands-free call by using the speaker 170A.

The receiver 170B, also referred to as an "earpiece", is configured to convert an analog audio electrical signal into a sound signal. When a call is answered or a speech message is received by using the device, the receiver 170B may be put close to a human ear to listen to a speech.

The microphone 170C, also referred to as a "mike" or a "mic", is configured to convert a sound signal into an analog audio electrical signal. When making a call or sending a speech message, the user may place the mouth of the user near the microphone 170C to make a sound, to input a sound signal to the microphone 170C. The microphone 170C may be a built-in component of the device, or may be an external accessory of the device.

In some embodiments, the device may include one or more microphones 170C. Each microphone or a plurality of microphones may cooperate to implement functions of collecting sound signals in all directions and converting the collected sound signals into analog audio electrical signals, and may further implement noise reduction and identify a sound source, or a directional recording function.

A quantity of microphones 170C is not specifically limited in embodiments of this application.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the device. In some other embodiments of this application, the device may include more or fewer components than those shown in the figure, or a combination of a part of the components, or splits from a part of the components, or an arrangement of different components. The components shown in the figure may be implemented by hardware, software, or a combination of software and hardware.

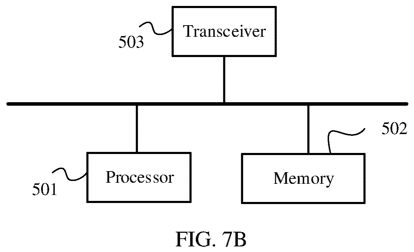

For example, FIG. 7B shows another example structure of the device. As shown in FIG. 7B, the device includes a processor 501, a memory 502, and a transceiver 503. For implementations of the processor 501 and the memory 502, refer to implementations of the processor and the memory of the device shown in FIG. 4. The transceiver 503 is configured to interact with another device. The transceiver 503 may be a device based on Wi-Fi, Bluetooth, or another communication protocol.

In addition, for structures of other devices in the systems shown in FIG. 4 and FIG. 5, refer to the structures of the devices shown in FIG. 7A and FIG. 7B. Details are not described herein again.

FIG. 7A and FIG. 7B are merely possible examples of structures of the device (for example, a terminal) in the foregoing system and another device (for example, a server) in the system, and do not constitute a limitation on structures of the device and the another device in the advertising system.

The following describes technical solutions provided in embodiments of this application in detail with reference to the accompanying drawings by using an example in which a mobile phone is used as the device.

The following describes the rendering method provided in embodiments of this application with reference to the accompanying drawings in embodiments of this application.

The following uses the architecture shown in FIG. 5 or FIG. 7A as an example to describe the rendering method provided in embodiments of this application. Units in the following embodiments may have components shown in FIG. 5 or FIG. 7A. Details are not described again. It should be noted that, in this embodiment of this application, a name of a message exchanged between devices, a quantity of messages, a name of a parameter in the message, or the like is merely an example, and another name may be used in a specific implementation. In addition, actions, terms, and the like in embodiments of this application may be mutually referenced. This is not limited.

The following describes in detail the rendering method provided in this embodiment of this application. The following mainly uses an example in which the terminal is a mobile phone and the application is a 3D game application. This is uniformly described herein, but does not constitute a limitation on a terminal type and an application (APP) type.

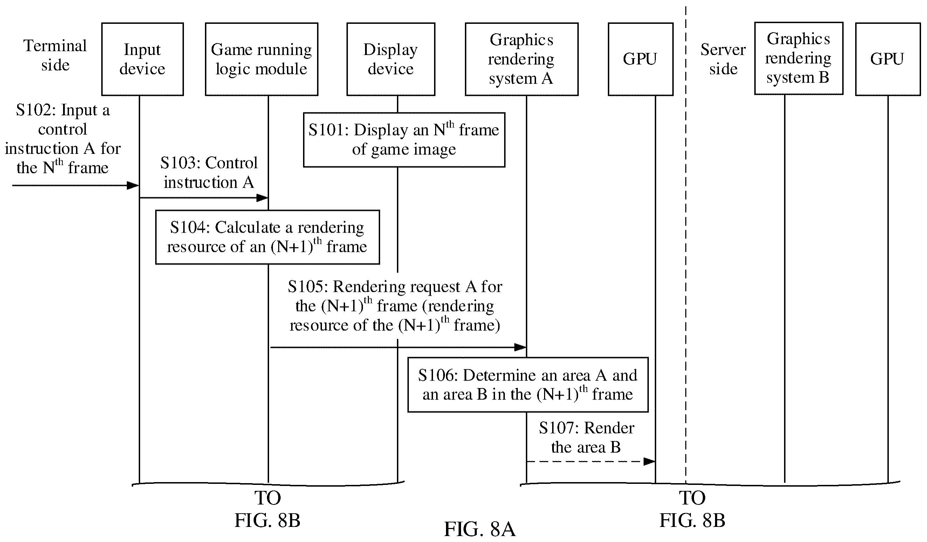

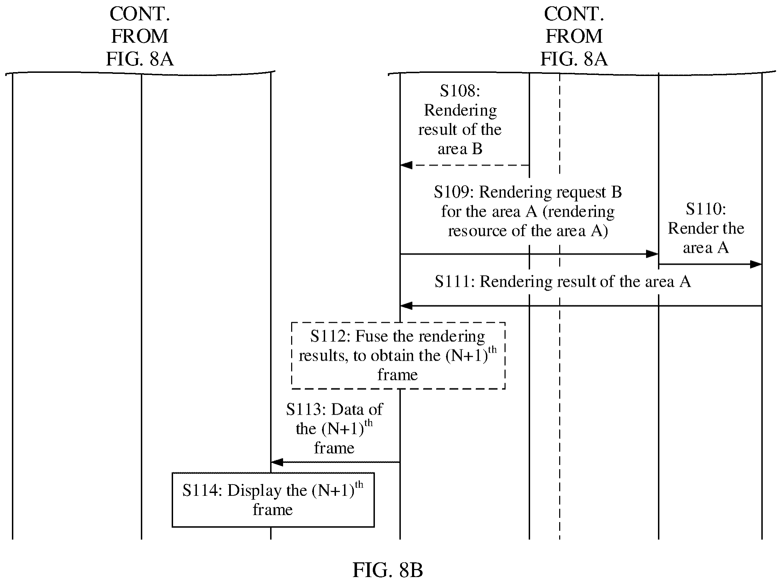

Embodiments of this application provide a rendering method. In a running process of an application, a terminal and a server may collaboratively process a task of the application, to avoid a performance bottleneck caused by independently processing the task of the application by the server, so that normal running of the application can be ensured as much as possible. A processing procedure in a process in which a user plays a 3D game by using a mobile phone is used as an example. As shown in FIG. 8A and FIG. 8B, the method includes the following steps.

S101: A display device displays an N^{th} frame of game image.

For example, the display device is a display of the mobile phone.

S102: An input device receives a control instruction A for the N^{th} frame of game image (which may be referred to as an N^{th} frame for short).

Optionally, the input device may be a device like a handle, a keyboard, or a mobile phone screen. For example, the mobile phone displays the N^{th} frame of game image 20 of the game application shown in FIG. 3, the user (player) moves the character 202 in the game image 20, and the mobile phone receives the control instruction A for moving the character 202.

In a possible implementation, after receiving the control instruction A input by the player, the input device may convert the control instruction A into a corresponding input event.

S103: A game running logic module receives the control instruction A.

In a possible implementation, the input device may transfer the input event corresponding to the control instruction A to the game running logic module. The game running logic module may be, for example, a module in an engine of a game application.

In a possible implementation, the game running logic module may be implemented as a CPU or a functional module in the CPU.

S104: The game running logic module determines a rendering resource of an (N+1)^{th} frame.

The game running logic module may perform corresponding game logic calculation based on different control instructions A of the player, to determine rendering resources. For example, if the player moves the character 202 in the N^{th} frame of game image 20 shown in FIG. 3 through a movement operation, the game running logic module may perform calculation based on duration and a direction of the movement operation, and determine a location of the character 202 in a subsequent game image (for example, the (N+1)^{th} frame) based on a calculation result. For another example, if the player inputs a skill release operation, the game running logic module may perform corresponding particle simulation or animation simulation calculation based on the skill release operation and configuration logic of the game application, and determine a rendering effect of the character 202 in a subsequent game image based on a simulation calculation result.

In this step, the game running logic module can determine a rendering resource required for rendering the game image, for example, determine mesh information, location information, and shader (used to calculate an illumination status related to the character) information of the character in the game image.

S105: The game running logic module sends a rendering request A for the (N+1)^{th} frame, where the rendering request A indicates the rendering resource of the (N+1)^{th} frame.

After determining the rendering resource required for rendering the game image, the game running logic module needs to send the rendering request to a graphics rendering system in the game application of the mobile phone, so that the graphics rendering system invokes a GPU for rendering.

For example, before rendering the (N+1)^{th} frame of game image, the game running logic module sends the rendering request A for the (N+1)^{th} frame, where the rendering request A indicates the rendering resource of the (N+1)^{th} frame.

Optionally, the rendering resource includes rendering data and pipeline data. Optionally, the pipeline data may be different based on factors such as a terminal model, a computing capability, and a rendering effect requirement of the game application.

S106: The graphics rendering system of the mobile phone determines an area A and an area B in the (N+1)^{th} frame.

In this embodiment of this application, if a developer configures a device-cloud scheduling strategy (a rendering strategy) for the game application in a development phase of the game application, the graphics rendering system of the mobile phone may calculate, according to the device-cloud scheduling strategy, an area (the area A) rendered by the server, and an area (the area B) rendered by the mobile phone, where the area B is an area other than the area A in the (N+1)^{th} frame.

In this embodiment of this application, if the device-cloud collaboration capability is configured and activated for the game application, the graphics rendering system of the mobile phone may determine, with reference to a service requirement of the game application, the area A that is in the (N+1)^{th} frame and in which rendering can be performed by the server, so that the server shares some rendering tasks of the mobile phone. This reduces a rendering amount of the mobile phone and improves rendering efficiency.

In some embodiments, the game image includes a static area and a dynamic area. The static area may be an area in which content in a game image is unchanged, or an area in which image content changes slightly between frames (for example, a change degree is less than a threshold), or an area in which image content changes slowly between frames (for example, a change degree is less than a threshold). The dynamic area may be an area in which content in a game image changes, or an area in which image content changes greatly between frames, or an area in which image content changes quickly between frames. For example, a background (a house, another static object, or the like) area in the game image may be used as the static area, the character may change with the control instruction A, and an area in which the character is located is the dynamic area.

In a possible implementation, the graphics rendering system of the mobile phone may determine that the mobile phone locally renders a game image in a dynamic area in the (N+1)^{th} frame, and the server renders a game image in a static area in the (N+1)^{th} frame. In other words, the area A is the static area in the (N+1)^{th} frame, and the area B is the dynamic area in the (N+1)^{th} frame. In this method, image content in the static area in the game image changes slightly or does not change. Therefore, an image in the area is delivered to the server for rendering. Even if quality of a network between the mobile phone and the server is poor, and the server does not feed back a rendering result to the mobile phone in time, the player may not have obvious perception. Image content in the dynamic area changes or changes greatly. Therefore, an image in the area is delivered to the mobile phone for rendering, so that the mobile phone can immediately perform rendering in response to the control instruction A of the player, and display the image in the dynamic area to the player, to improve smoothness of game running.

In some other embodiments, the game image includes a high-level low-frequency area and a low-level high-frequency area. Rendering computing power consumption of the high-level low-frequency area is high, and the player does not have a high requirement on real-time performance of an image in the area. Even if the image in the area is not updated in time, the player may not have obvious perception. The high-level low-frequency area may be, for example, but is not limited to, a dynamic global illumination area, a light reflection area, or a shadow area. Rendering computing power consumption of the low-level high-frequency area is low, and the player has a high requirement on real-time performance of an image in the area. Therefore, after the player sends the control instruction A, the mobile phone needs to immediately respond to the control instruction A, and update the image in the area.

In a possible implementation, the graphics rendering system of the mobile phone may determine that the mobile phone renders a low-level high-frequency area in the (N+1)^{th} frame, and the server renders a high-level low-frequency area in the (N+1)^{th} frame. In other words, the area A is the high-level low-frequency area in the (N+1)^{th} frame, and the area B is the low-level high-frequency area in the (N+1)^{th} frame.

S107: The graphics rendering system of the mobile phone invokes the GPU to render the area B.

In a possible implementation, after determining the area B that needs to be rendered by the mobile phone in the (N+1)^{th} frame, the graphics rendering system of the mobile phone prepares rendering data and a rendering pipeline of the area B based on the rendering request A.

In a possible implementation, after preparing the rendering data of the area B and the rendering pipeline of the area B, a core rendering system invokes the GPU of the mobile phone for rendering.

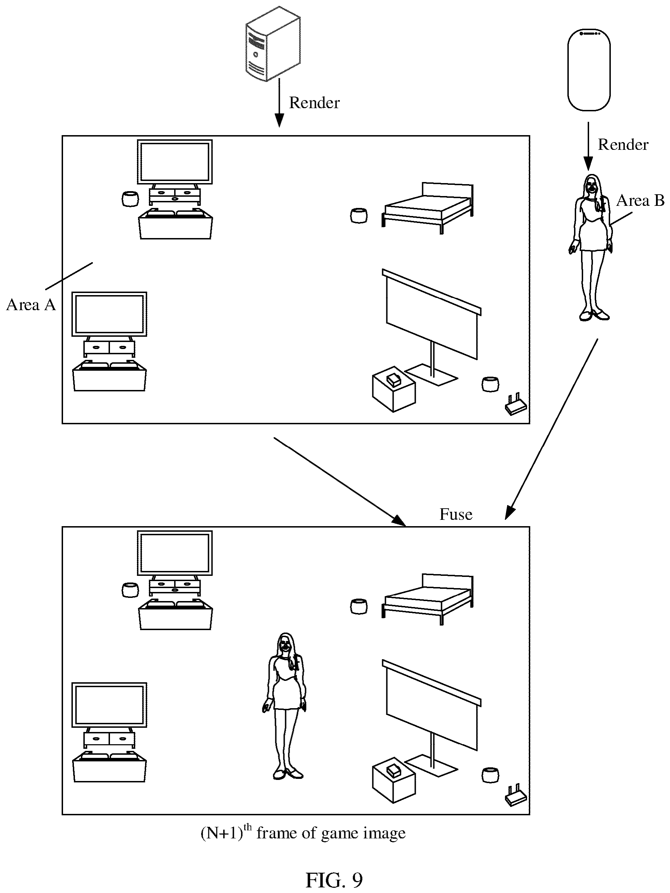

For example, as shown in FIG. 9, after determining that the area that needs to be rendered by the mobile phone is an area (an example of the area B) in which the character is located in the (N+1)^{th} frame, the mobile phone renders the area in which the character is located.

S108: The GPU returns a rendering result of the area B to the graphics rendering system of the mobile phone.

S109: The graphics rendering system of the mobile phone sends a rendering request B for the area A to the server.

In some embodiments, the rendering request includes rendering data of the area A in the (N+1)^{th} frame.

For example, as shown in FIG. 9, after determining that the area that needs to be rendered by the server is an area (an example of the area A) other than the area of the character in the (N+1)^{th} frame, the mobile phone sends the rendering request B to a graphics rendering system of the server, where the rendering request B may carry the rendering data of the area A, for example, data such as a normal, a vertex, a map, a texture, and a material of an object like a television or a sofa in the area A.

S110: The graphics rendering system of the server invokes a GPU of the server to render the area A in the (N+1)^{th} frame.

In a possible implementation, after receiving the rendering request B, the server starts a corresponding cloud rendering task, and a data storage and retrieval service in the graphics rendering system of the server invokes, through an RHI, the GPU for rendering.

The foregoing example is still used. For example, the rendering request B of the mobile phone carries the rendering data of the area A, for example, the data such as the normal, the vertex, the map, the texture, and the material of the object like the television or the sofa in the area A. The server may render the area A based on the rendering data of the area A.

S111: The GPU of the server returns a rendering result of the area A.

In a possible implementation, the GPU of the server returns the rendering result of the area A to the graphics rendering system of the server, and the graphics rendering system of the server returns the rendering result of the area A to the graphics rendering system of the mobile phone.

S112: The graphics rendering system of the mobile phone fuses the rendering result of the area A and the rendering result of the area B, to obtain the (N+1)^{th} frame (a game image).

For example, as shown in FIG. 9, the mobile phone fuses the locally rendered character area B (an example of a first area) with the background area A (an example of a second area) rendered by the server, to obtain the (N+1)^{th} frame of game image (an example of the first image), where a bottom layer is the background, and an upper layer is the character.

For another example, the mobile phone renders a basic contour of each object in the (N+1)^{th} frame, and the server renders dynamic global illumination and a reflection effect of the (N+1)^{th} frame. The mobile phone superimposes and fuses the dynamic global illumination and the reflection effect on the basic contour of each object, to obtain the (N+1)^{th} frame of game image.

S113: The graphics rendering system of the mobile phone sends data of the (N+1)^{th} frame to the display device.

For example, the mobile phone sends, to the display, data that is of the (N+1)^{th} frame of game image shown in FIG. 9 and that is obtained through fusion.

S114: The display device displays the (N+1)^{th} frame.

The foregoing example is still used. After receiving the data of the (N+1)^{th} frame of game image, the (N+1)^{th} frame of game image is displayed on the display.

The foregoing uses rendering of the (N+1)^{th} frame as an example for description. For a rendering process of another frame of game image, refer to the rendering process of the (N+1)^{th} frame.

In this embodiment of this application, a flexible device-cloud collaboration strategy may be configured, so that tasks in a running process of the 3D application are allocated to the terminal and the server as required, and the terminal and the server work collaboratively to support running of the 3D application. For example, only rendering tasks of some high-level low-frequency areas (for example, areas with effects such as global illumination and reflection) are allocated to the server. For another example, only the rendering task may be allocated to the server for execution, and a task (for example, payment or account login) other than the rendering task is executed by the terminal. For another example, only some rendering tasks are allocated to the server for execution. Therefore, GPU and CPU resources of the terminal can be fully used, and a waste of computing resources of the terminal is avoided.

The foregoing is described by using an example in which the mobile phone renders a partial area in the (N+1)^{th} frame and the server renders another partial area in the (N+1)^{th} frame. In some other embodiments, a rendering task of a complete game image in the (N+1)^{th} frame may be delivered to the server for execution, and the mobile phone performs a task other than rendering in a game running process, for example, the mobile phone performs a task like payment.

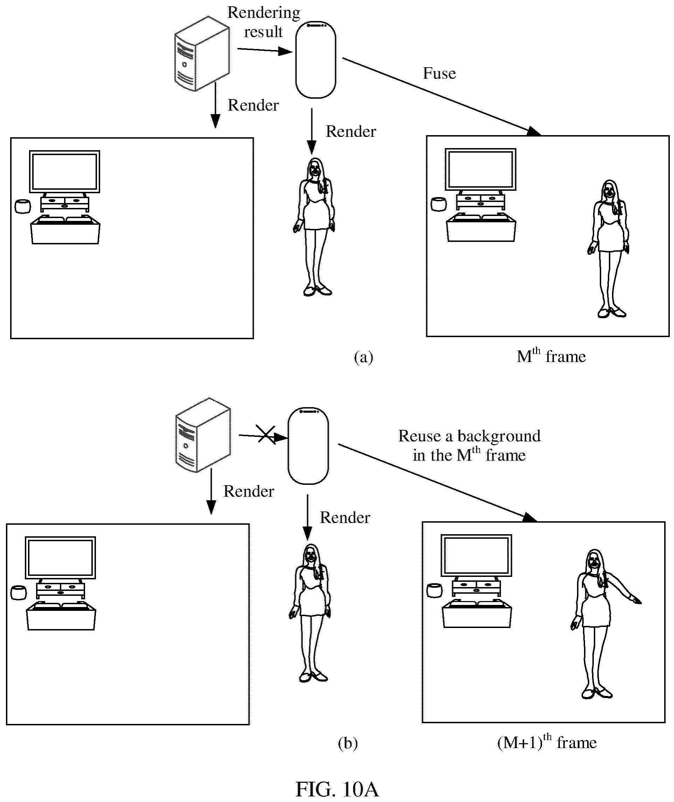

The foregoing uses an example in which the terminal receives the rendering result returned by the server for description. In some other embodiments, the terminal may not receive the rendering result from the server. For example, when the quality of the network between the terminal and the server is poor, if the terminal does not receive the rendering result from the server within specific duration, the terminal may display the image of the 3D game based on the local rendering result. For example, as shown in (a) in FIG. 10A, the terminal renders an area in which the character is located in an M^{th} frame of game image, and the terminal sends a rendering request to the server. Within the specific duration, if the terminal receives a rendering result of a background area in the M^{th} frame from the server, the terminal fuses the rendering result of the background area and a rendering result of the area in which the character is located, to obtain the M^{th} frame. Then, as shown in (b) in FIG. 10A, the terminal continues to render an area in which the character is located in an (M+1)^{th} frame of game image, and the terminal sends a rendering request to the server. Within the specific duration, if the terminal fails to receive a rendering result (an example of a fourth rendering result) of a background area (an example of a fourth area) in the (M+1)^{th} frame from the server, the terminal may obtain the (M+1)^{th} frame based on a rendering result (an example of a third rendering result) of the area (an example of a third area) in which the character is located. In a possible implementation, the terminal may fuse the rendering result of the background area in the M^{th} frame and the rendering result of the area in which the character is located in the (M+1)^{th} frame, to obtain the (M+1)^{th} frame.

In the method, the terminal renders an area (for example, the area in which the character is located) that has a high requirement on real-time performance in the game image, or it is understood that the terminal renders an area that has great impact on image smoothness, a user operation, or a user vision in the game image. In this way, even if the quality of the network between the terminal and the server is poor, and the terminal cannot receive the rendering result of the server or cannot receive the rendering result of the server in time, that the terminal generates the game image including the area (for example, the area in which the character is located) may not be affected. This meets a requirement for real-time generation and display of the game image including the area, and improves smoothness of the game image.

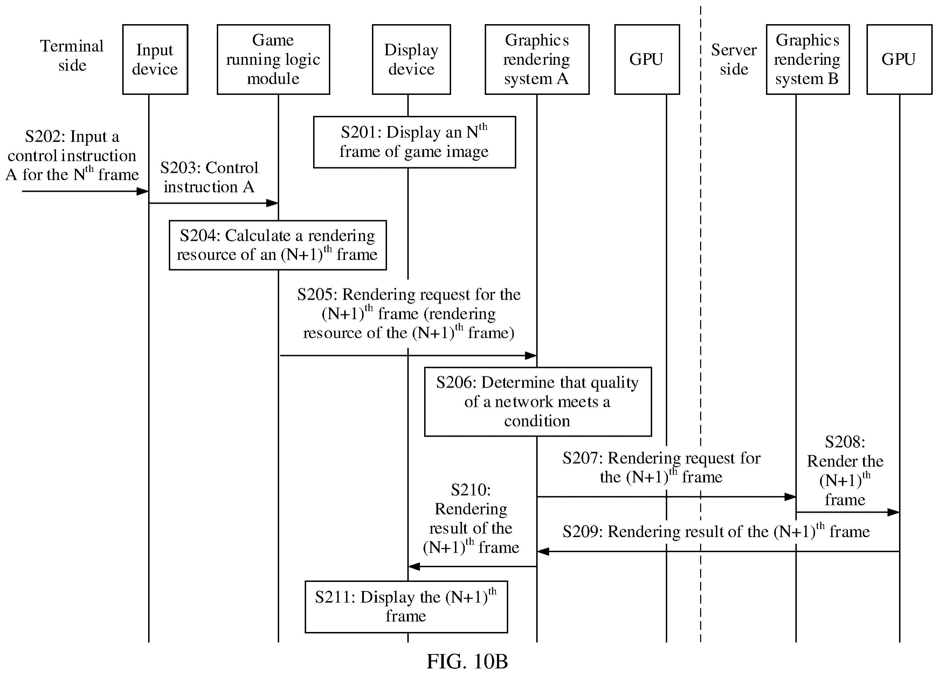

An embodiment of this application further provides a rendering method. A mobile phone may determine, based on quality of a network, whether to deliver a rendering task to a server for execution. As shown in FIG. 10B, the method may include the following steps.

For specific implementations of S201 to S205, refer to S101 to S105.

S206: A graphics rendering system of the mobile phone determines that the quality of the network meets a condition.

That the quality of the network meets the preset condition may mean that the quality of the network meets at least one of the following conditions: A packet loss rate is less than or equal to a packet loss rate threshold (a first threshold), a bandwidth between the mobile phone and the server is greater than or equal to a bandwidth threshold (a second threshold), a transmission delay between the terminal and the server is less than or equal to a third threshold, and a transmission rate between the mobile phone and the server is greater than or equal to a rate threshold (a fourth threshold). Certainly, the preset condition may alternatively be another condition, for example, a throughput meets a specific threshold. The preset condition is not limited in embodiments of this application, provided that the preset condition can be used to determine the quality of the network, to determine whether the terminal performs collaborative rendering with the server.

In this embodiment of this application, if the quality of the network meets the condition, the following S207 to S210 may be performed, and the server executes a rendering task of an (N+1)^{th} frame. If the quality of the network meets the condition, it means that the quality of the network between the mobile phone and the server is good, so that the server can return a rendering result to the mobile phone in time after rendering, to improve smoothness of game running.

On the contrary, if the quality of the network does not meet the condition, it means that the quality of the network between the mobile phone and the server is poor. In this case, to avoid a case in which the rendering result cannot be returned to the mobile phone in time because the server performs rendering, the mobile phone does not send a rendering request to the server, and the mobile phone locally renders the (N+1)^{th} frame. Subsequently, when the quality of the network meets the condition, a rendering task of a subsequent frame may be delivered to the server.

S207: The graphics rendering system of the mobile phone sends a rendering request for the (N+1)^{th} frame to a graphics rendering system of the server.

In some embodiments, the rendering request includes rendering data of the (N+1)^{th} frame.

For example, when the bandwidth between the mobile phone and the server is high, the mobile phone sends the rendering request for the (N+1)^{th} frame shown in FIG. 9 to the server. The rendering request carries rendering data of an object like a character, a television, or a sofa in the (N+1)^{th} frame.

S208: The graphics rendering system of the server invokes a GPU of the server to render the (N+1)^{th} frame.

S209: The GPU of the server returns a rendering result of the (N+1)^{th} frame.

S210: The graphics rendering system of the mobile phone sends the rendering result of the (N+1)^{th} frame to a display device.

S211: The display device displays the (N+1)^{th} frame based on the rendering result of the (N+1)^{th} frame.

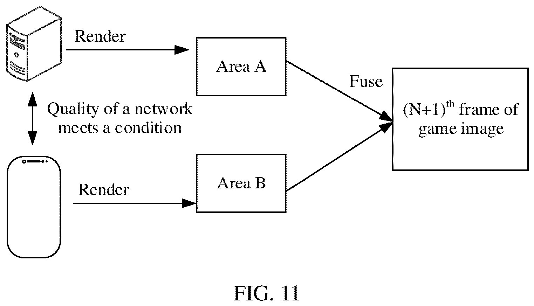

In some embodiments, the method shown in FIG. 8A and FIG. 8B may be implemented in combination with the method shown in FIG. 10B. For example, before rendering the (N+1)^{th} frame of game image, the mobile phone may first determine the quality of the network. As shown in FIG. 11, if the quality of the network between the mobile phone and the server is good, the mobile phone may deliver a rendering task of a partial area (for example, a static area A) in the (N+1)^{th} frame to the server for execution, and a rendering task of another partial area (for example, a dynamic area B) in the (N+1)^{th} frame is executed by the mobile phone. On the contrary, if the quality of the network is poor, the mobile phone locally renders the (N+1)^{th} frame.

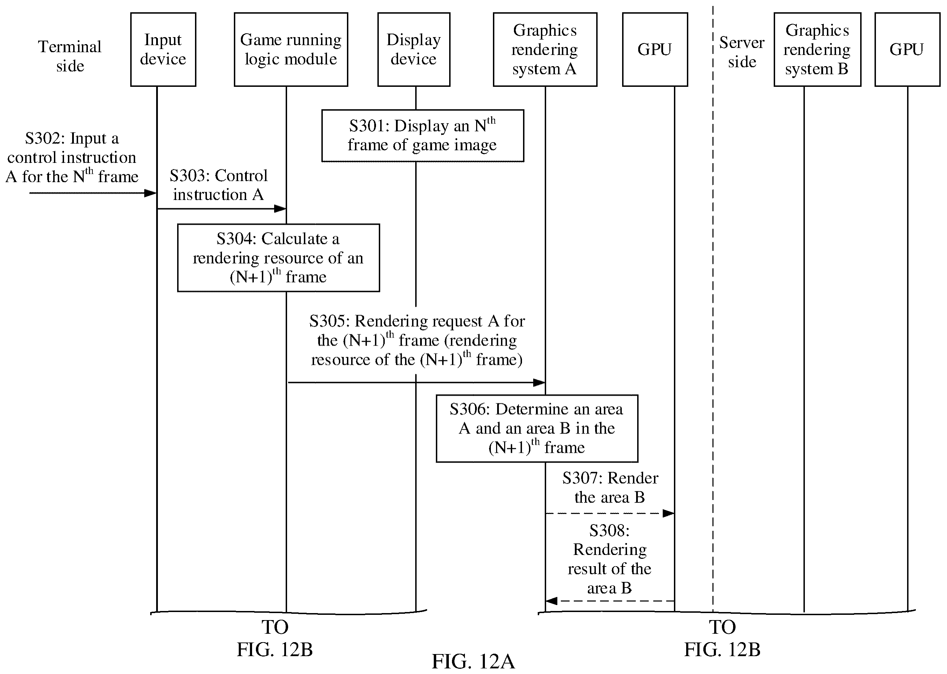

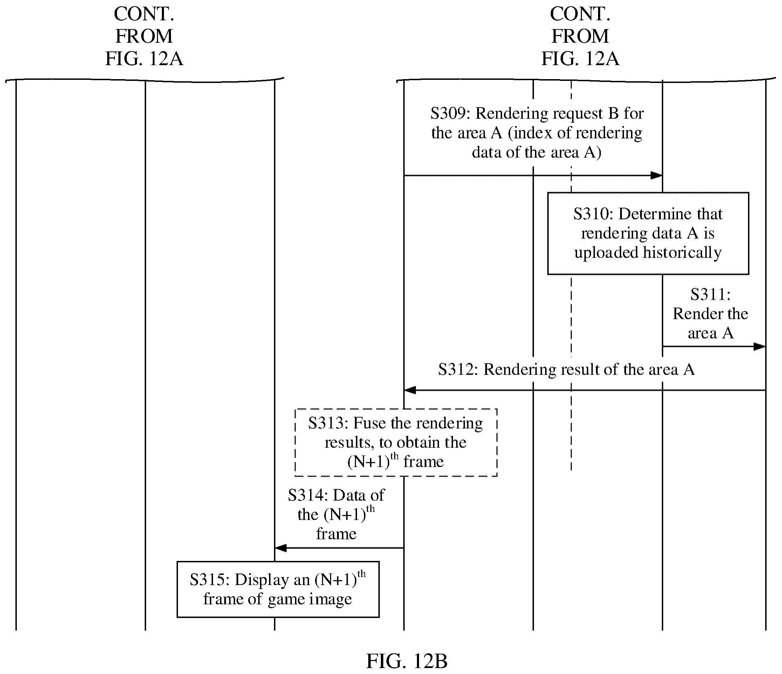

An embodiment of this application further provides a rendering method. When a mobile phone uploads rendering data to a server via a rendering request, for rendering data that is uploaded to the server historically, the mobile phone may upload only an index of the rendering data, to reduce transmission overheads. For example, a solution for reducing transmission overheads is used in the method shown in FIG. 8A and FIG. 8B is used as an example. As shown in FIG. 12A and FIG. 12B, the method may include the following steps.

For specific implementations of S301 to S308, refer to S101 to S108.

S309: A graphics rendering system of the mobile phone sends a rendering request B for an area A to a graphics rendering system of the server, where the rendering request B includes an index of rendering data of the area A.

In this embodiment of this application, the mobile phone calculates the index of the rendering data of the area A, and uploads the index of the rendering data to the server. In a possible implementation, the mobile phone calculates a Hash (Hash) value of the rendering data, and uses the Hash value as the index of the rendering data.

S310: The graphics rendering system of the server determines the rendering data that is uploaded, and obtains, from a terminal, other rendering data that is not uploaded to the server.

The rendered data may include data of a finer granularity. For example, the rendering data includes an action library, a mesh, and a map. The action library may be used to indicate a posture of an object (for example, a character).

After receiving the index of the rendering data of the area A, the graphics rendering system of the server determines, based on the index of the rendering resource, whether the rendering data is uploaded before. If the rendering data is uploaded before, the mobile phone does not need to repeatedly upload the rendering data, and the server may query the corresponding rendering data in the server based on the index uploaded by the mobile phone. On the contrary, if the rendering data is not uploaded before, the server indicates the mobile phone to upload the rendering data. For example, after receiving the rendering request, the server locally queries a hash value of a mesh of an object (for example, a character A) that needs to be rendered in the area A. Through query, it is found that the mesh of the character A is uploaded, and an action library corresponding to the mesh is a standing posture. If the server needs to render the character A in a sitting posture this time, and the mobile phone is not uploaded an action library of the sitting posture, the server may return a notification to the mobile phone, to inform the mobile phone to upload the action library of the sitting posture. After the mobile phone uploads the action library of the sitting posture based on the notification of the server, the server renders the character A based on rendering data such as the action library of the sitting posture uploaded by the mobile phone this time and a mesh of the character A. Only two pieces of fine-grained rendering data, namely, the action library and the mesh, are listed herein. In a specific implementation, the server may compare more and less other fine-grained rendering data, and determine, based on a hash value, whether the mobile phone needs to upload corresponding rendering data.

In a possible implementation, the server stores the received rendering data in a resource library, calculates a hash value of the rendering data, and stores the hash value of the rendering data. For example, Table 1 shows the rendering data stored in the server and a hash value corresponding to each piece of rendering data. Each color block on clothing 1 may correspond to one map, and the map may be used for other clothing. For example, a map 1 or a map 2 on the clothing may be reused to describe colors of corresponding areas on the other clothing.

**Table 1**

| Rendering data | Hash value |
|---|---|
| Map 1 on clothing 1 | XXXXX |
| Map 2 on clothing 1 | yyyyy |
| Material 1 | zzzzz |
| Mesh 1 | aaaaa |
| ... | ... |

In a possible implementation, after receiving the hash value of the rendering data of the area A from the mobile phone, the server checks the hash value, and queries the resource library of the server for rendering the data corresponding to the hash value. If the rendering data corresponding to the hash value is found in the resource library, it indicates that the rendering data is uploaded before and does not need to be uploaded again.

Optionally, the rendering data of the area A may be one or more pieces of rendering data. For example, the rendering data of the area A includes a background map in an (N+1)^{th} frame of game image. For another example, the rendering data of the area A includes the background map in the (N+1)^{th} frame of game image and rendering data of global illumination in the background.

Optionally, the one or more pieces of rendering data may be rendering data that is uploaded to the server historically, or partial rendering data of the one or more pieces of rendering data is uploaded to the server, and partial rendering data of the one or more pieces of rendering data is not uploaded to the server. This is not limited in embodiments of this application.

In this embodiment of this application, if the rendering data A (for example, a desk and a chair in a game background) is uploaded historically, the server may inform the mobile phone to upload rendering data (for example, rendering data other than rendering data of the desk and the chair in the area A) other than the rendering data A of the area A. The mobile phone does not need to repeatedly upload the rendering data A to the server, so that upload overheads can be reduced.

On the contrary, if the rendering data A is not uploaded before, the server may inform the mobile phone to upload the rendering data (including uploading the rendering data A corresponding to an index and other rendering data) of the area A.

S311: The graphics rendering system of the server invokes a GPU of the server to render the area A.

In some embodiments, if the server determines that a piece of rendering data required by the rendering area A is uploaded historically, the server may obtain the rendering data from the resource library. If the server determines that the piece of rendering data required by the rendering area A is not uploaded historically, the server may request, inform, or indicate the mobile phone to upload the rendering data.

After obtaining all rendering data required for rendering the area A, the server renders the area A.

In comparison with a case in which rendering data is synchronously submitted each time a terminal side submits a rendering request to a cloud side, resulting in an excessively large amount of transmission data and excessively long upload time, in the foregoing method, a globally unique index may be established for corresponding to-be-uploaded rendering data in an index calculation manner. In this way, a globally unique index can be formed on the server when the rendering data is uploaded for the first time. In a subsequent rendering process, when the server needs the rendering data (for example, the background map), the terminal only needs to notify the server of an index corresponding to the rendering data, and the terminal does not need to repeatedly upload the rendering data. The server may find, based on the index, the rendering data that is uploaded before. It can be learned that, if the server needs a large amount of rendering data for rendering, in the method, repeated upload of the rendering data can be avoided, and an upload bandwidth can be reduced.

For example, when rendering an N^{th} frame, the mobile phone uploads, to the server, a background map required by the N^{th} frame, and the server stores the background map in the resource library. Subsequently, when rendering is performed on the (N+1)^{th} frame, because the background on the two frames is unchanged, the mobile phone uploads an index of the background map. The server finds the corresponding background map in the resource library based on the index, and reuses the background map to render a corresponding area in the (N+1)^{th} frames. It can be learned that, in some scenarios, the server may reuse rendering data (for example, a map) uploaded before by the terminal, and the terminal does not need to repeatedly upload the rendering data.

For S312 to S315, refer to S111 to S114.

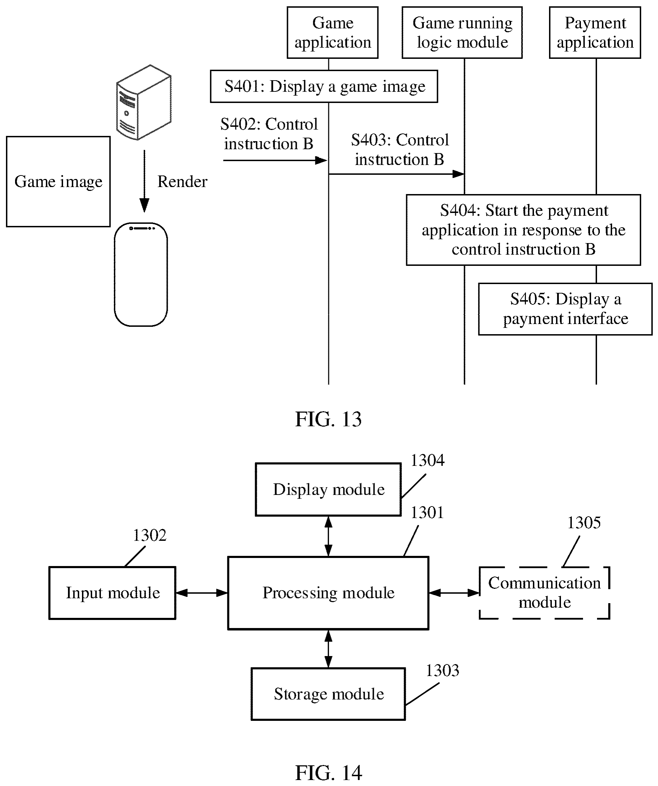

An embodiment of this application further provides a rendering method, to improve processing efficiency of a cloud game-related task in a running process of a cloud game. As shown in FIG. 13, the method includes the following steps.

S401: A game application displays a game image.

The game image is rendered by a server. For example, when quality of a network between the server and a mobile phone is good, the server renders the game image, so that rendering consumption of the mobile phone can be reduced, and rendering efficiency is not affected. Alternatively, the game image is collaboratively rendered by the server and the mobile phone. Alternatively, the game image is rendered by the mobile phone. For example, when the quality of the network quality between the server and the mobile phone is poor, the mobile phone renders the game image, so that a rendering delay caused when the mobile phone is disconnected from the network can be avoided.

S402: The game application receives a control instruction B, where the control instruction B is used to trigger a payment task.

For example, if a player expects to purchase game equipment in a process of playing the cloud game, the player may tap a purchase button on an interface (an example of a first operation).

S403: The game application sends the control instruction B to a game running logic module.

After receiving the control instruction B that the player taps the purchase button, the game application sends the control instruction B to the game running logic module.

S404: The game running logic module starts a payment application in response to the control instruction B.

S405: The payment application displays a payment interface.

In some embodiments, in response to the control instruction B, the game running logic module starts the local payment application of the mobile phone (an example of a second application), and the payment application displays the payment interface. Then, the user performs payment on the payment interface. After payment is completed, the mobile phone may display a payment completion interface.

Most tasks such as payment of the mobile phone depend on a local resource of the mobile phone. In this case, in a related technology, game logic is all run on the server, and consequently, the server cannot directly use a corresponding resource of the mobile phone, and processing efficiency of the payment task is low. In this embodiment of this application, in a game running process, after receiving the control instruction B, the game running logic module may directly invoke a local resource of the mobile phone to process the payment task. For example, the game running logic module may directly start the local payment application, and the player may perform payment on the interface of the payment application, to purchase the game equipment. It can be learned that, in the method, in the game running process, a task, like payment, that depends on support of a function of the terminal is processed by the terminal. Therefore, the terminal can quickly process the payment task by using the function of the terminal, to improve processing efficiency of the payment task.

Herein, an example in which the terminal directly starts a local payment application to quickly implement a payment function in a running process of a 3D game application (an example of a first application) is used. In some other embodiments, in the running process of the 3D game application, the terminal may further directly start, based on a current scenario or a user requirement, another local application, to quickly implement a corresponding function or execute a corresponding task in time.

In the foregoing method, CPU computing logic and GPU computing logic are split and decoupled. A cloud may perform partial GPU computing (for example, rendering), and a terminal side retains a partial GPU computing function (for example, rendering). Because a computing capability of the cloud is strong, a computing task with high computing power consumption may be executed by the cloud. For example, cloth simulation and fluid simulation are performed by the cloud.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on the execution sequence between the steps. The steps may alternatively be performed in another execution sequence. It is not intended to indicate that the execution order is the only order in which these operations can be performed. A character of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiments may be equivalently replaced with other possible steps. Alternatively, some steps in the method embodiments may be optional, and may be deleted in some use scenarios. Alternatively, another possible step may be added to the method embodiments. Alternatively, execution bodies (for example, a functional module) of some steps in the method embodiments may be replaced with other execution bodies.

In addition, the foregoing method embodiments may be implemented separately or in combination.

Some other embodiments of this application provide an apparatus. The apparatus may be the foregoing terminal (for example, a mobile phone) or server. The apparatus may include a display, a memory, and one or more processors. The display and the memory are coupled to the processor. The memory is configured to store computer program code, and the computer program code includes computer instructions. When the processor executes computer instructions, the device may perform functions or steps performed by the mobile phone in the foregoing method embodiments. For a structure of the device, refer to the device shown in FIG. 3.

A core structure of the device may be represented as a structure shown in FIG. 14. The device includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of user equipment. Specifically, the processing module 1301 may be configured to: control, based on a specific trigger condition, content displayed on a primary screen. The processing module 1301 is further configured to: process input instructions or data, and determine a display style based on processed data.

The input module 1302 is configured to: obtain instructions or data inputted by a user, and transmit the obtained instructions or data to another module of the device. Specifically, an input mode of the input module 1302 may include touch, a gesture, proximity to a screen, or the like, or may be a voice input. For example, the input module may be a screen of the device, and may obtain an input operation of the user, generate an input signal based on the obtained input operation, and transmit the input signal to the processing module 1301.

The storage module 1303 may include a volatile memory and/or a nonvolatile memory. The storage module is configured to store instructions or data related to at least one of other modules of user equipment.

The display module 1304 may include, for example, a liquid crystal display (LCD), a light emitting diode (LED) display, an organic light-emitting diode (OLED) display, a micro-electro-mechanical system (MEMS) display, or an electronic paper display; and is configured to display content (for example, a text, an image, a video, an icon, and a symbol) that can be viewed by the user.

Optionally, the device further includes a communication module 1305, configured to support a personal device in communicating with another personal device (through a communication network). For example, the communication module may be connected to a network through wireless communication or wired communication, to communicate with another personal device or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communication (GSM). The wireless communication may include, for example, short-range communication. The short-range communication may include at least one of wireless fidelity (Wi-Fi), Bluetooth, near field communication (NFC), magnetic stripe transmission (MST), or GNSS.

It should be noted that each functional module of the apparatus may perform one or more steps in the foregoing method embodiments.

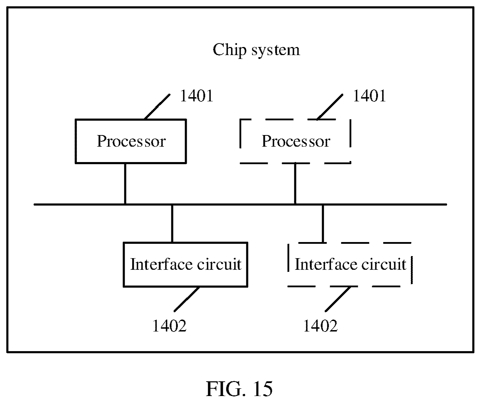

An embodiment of this application further provides a chip system. As shown in FIG. 15, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of the device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the device is enabled to perform the steps in the foregoing embodiments. Certainly, the chip system may further include another discrete device. This is not specifically limited in embodiments of this application.

An embodiment of this application further provides a computer storage medium. The computer storage medium includes computer instructions. When the computer instructions are run on the foregoing device, the device is enabled to perform functions or steps performed by the mobile phone in the foregoing method embodiments.

An embodiment of this application further provides a computer program product. When the computer program product runs on a computer, the computer is enabled to perform functions or steps performed by the mobile phone in the foregoing method embodiments.

The foregoing descriptions about implementations allow a character skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and there may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing description is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A rendering method, applied to a terminal, wherein a first application is installed on the terminal, and the method comprises:
rendering a first area in a first image of the first application, to obtain a first rendering result of the first area;
sending a first rendering request to a server, wherein the first rendering request is used to request the server to render a second area in the first image, to obtain a second rendering result, and the second area is an area other than the first area in the first image;
obtaining the second rendering result from the server;
fusing the first rendering result and the second rendering result to obtain the first image; and
displaying the first image.

2. The method according to claim 1, further comprising:
rendering a third area in a second image of the first application, to obtain a third rendering result of the third area;
sending a second rendering request to the server, wherein the second rendering request is used to request the server to render a fourth area in the second image, to obtain a fourth rendering result, and the fourth area is an area other than the third area in the second image; and
when the fourth rendering result fails to be obtained from the server, displaying the second image based on the third rendering result.

3. The method according to claim 1 or 2, wherein the first area is a dynamic image area in the first image, and the second area is a static image area in the first image; or the first area is a low-level high-frequency area in the first image, and the second area is a high-level low-frequency area in the first image.

4. The method according to any one of claims 1 to 3, wherein sending the first rendering request to the server comprises:
determining quality of a network between the terminal and the server; and
if the quality of the network between the terminal and the server meets a preset condition, sending the first rendering request to the server.

5. The method according to claim 4, wherein that the quality of the network between the terminal and the server meets the preset condition comprises meeting at least one of the following conditions:
a packet loss rate between the terminal and the server is less than or equal to a first threshold, a bandwidth between the terminal and the server is greater than or equal to a second threshold, a transmission delay between the terminal and the server is less than or equal to a third threshold, and a transmission rate between the terminal and the server is greater than or equal to a fourth threshold.

6. The method according to any one of claims 1 to 5, further comprising:
obtaining data of the first image of the first application; and
determining the first area and the second area in the first image according to a rendering strategy.

7. The method according to claim 6, wherein the rendering strategy comprises: whether to activate a device-cloud collaboration capability when the first application is run, a preset condition for activating the device-cloud collaboration capability, and an image area that needs to be rendered by the server when the first application is run.

8. The method according to claim 6 or 7, wherein the rendering strategy is a strategy preset by a developer in the first application.

9. The method according to any one of claims 1 to 8, further comprising:
determining information about a first rendering resource corresponding to the second area, wherein the first rendering request comprises the information about the first rendering resource, and the information is used by the server to check whether the first rendering resource is stored.

10. The method according to any one of claims 1 to 9, wherein the first application comprises a 3D application, and the 3D application comprises at least one of the following applications: a 3D game application, a 3D social application, and a 3D live-streaming application.

11. The method according to any one of claims 1 to 10, wherein rendering the first area in the first image of the first application comprises:
rendering the first area in the first image of the first application by using a graphics processing unit GPU.

12. A rendering method, applied to a server, wherein the method comprises:
receiving a first rendering request from a terminal, wherein the first rendering request is used to request the server to render a second area in a first image, to obtain a second rendering result, and the second area is an area other than a first area in the first image; and
sending the second rendering result to the terminal, wherein the second rendering result is used to be fused with a first rendering result obtained by the terminal by rendering the first area, to obtain the first image.

13. The method according to claim 12, wherein the first area is a dynamic image area in the first image, and the second area is a static image area in the first image; or the first area is a low-level high-frequency area in the first image, and the second area is a high-level low-frequency area in the first image.

14. A terminal, comprising a processor and a memory, wherein
the memory is configured to store computer-executable instructions, the processor is coupled to the memory, and when the terminal runs, the processor executes the computer-executable instructions stored in the memory, so that the terminal performs the method according to any one of claims 1 to 11.

15. A server, comprising a processor and a memory, wherein
the memory is configured to store computer-executable instructions, the processor is coupled to the memory, and when the server runs, the processor executes the computer-executable instructions stored in the memory, so that the server performs the method according to claim 12 or 13.

16. A computer-readable storage medium, wherein the computer-readable storage medium comprises computer instructions, and when the computer instructions are run on a computer, the computer is enabled to perform the method according to any one of claims 1 to 11, or the computer is enabled to perform the method according to claim 12 or 13.

17. A chip system, comprising one or more processors, wherein when the one or more processors execute instructions, the one or more processors perform the method according to any one of claims 1 to 11, or perform the method according to claim 12 or 13.

18. A rendering system, comprising the terminal according to claim 14 and the server according to claim 15.
